# FASCICULE DE BREVET EUROPEEN

(11) **EP 3 411 851 B1**
(45) Date de publication et mention de la délivrance du brevet: **22.07.2020**
(21) Numéro de dépôt: 17707372.3
(22) Date de dépôt: 31.01.2017
(51) Int. Cl.: G06T 19/00, G06T 19/20

(54) **PROCÉDÉ DE CONTRÔLE NON-DESTRUCTIF D'UNE PIÈCE PAR REDRESSEMENT**
VERFAHREN ZUR ZERSTÖRUNGSFREIEN PRÜFUNG EINES TEILS DURCH BEGRADIGUNG
METHOD OF NON-DESTRUCTIVE INSPECTION OF A PART BY STRAIGHTENING

(30) Priorité: 01.02.2016 FR 1650787
(43) Date de publication de la demande: 12.12.2018
(73) Titulaire: SAFRAN, 75015 Paris (FR)
(72) Inventeur: MORARD, Vincent, Jérôme, 77550 Moissy-Cramayel (FR); GAY, Lionel, Christian, Jean-Loïc, 77550 Moissy-Cramayel (FR)
(74) Mandataire: Regimbeau
(86) Numéro de dépôt international: PCT/FR2017/050216
(87) Numéro de publication internationale: WO 2017/134379

(56) Documents cités:
- FR-A1- 3 000 256
- US-A- 6 041 132
- US-A1- 2009 225 077

## Description

### DOMAINE TECHNIQUE GENERAL

L'invention concerne le domaine du contrôle non destructif (CND) sur des pièces industrielles, notamment dans le domaine de l'aéronautique, à l'aide de volumes tomographiques numériques.

Plus précisément, l'invention concerne l'amélioration du contrôle visuel effectué par un opérateur.

Le CND est primordial pour contrôler la santé matière des matériaux. Par exemple, les aubes de soufflante, qui sont en composite de fibres de carbone tissées en trois dimensions, sont des pièces critiques qui doivent être contrôlées en intégralité. Mais le carter fan, le redresseur, les pales, les aubes, etc. peuvent aussi être concernés.

Les volumes tomographiques numériques sont obtenues à l'aide d'un tomographe dont le générateur de rayons X émet un faisceau traversant la pièce à explorer, avant d'être analysé, après atténuation, par un système de détection. L'image intermédiaire ainsi obtenue est appelée une « projection ». En acquérant une pluralité de projections dans différents plans de l'espace (avec un éventuel prétraitement) et en les recombinant, on obtient un volume tridimensionnel de la pièce avec une valeur de densité d'absorption des rayons X à chaque voxel.

Ces images tridimensionnelles permettent de visualiser l'intérieur de la pièce d'une manière non destructive.

### ETAT DE L'ART

Les pièces à inspecter 10 sont fabriquées en matériaux composites à l'aide de fibres de carbone tissées en trois dimensions et qui sont ensuite placés dans un moule puis injectés. La référence 10 s'applique aussi bien à la pièce physique qu'à sa représentation tridimensionnelle dans le volume tomographique V.

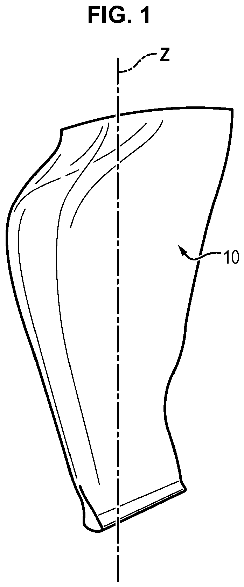

Après injection et usinage, certaines pièces présentent une double cambrure, appelée généralement « twist ». Les aubes de turbines présentent généralement cette forme (voir **figure 1**) : une courbure liée aux profils intrados-extrados, en forme de lunule en croissant, et une courbure en hélice, qui s'enroule sur elle-même. A titre d'exemple, la torsion hélicoïdale s'étend sur 70°. Ces deux déformations s'étendent selon une direction, dite direction principale Z.

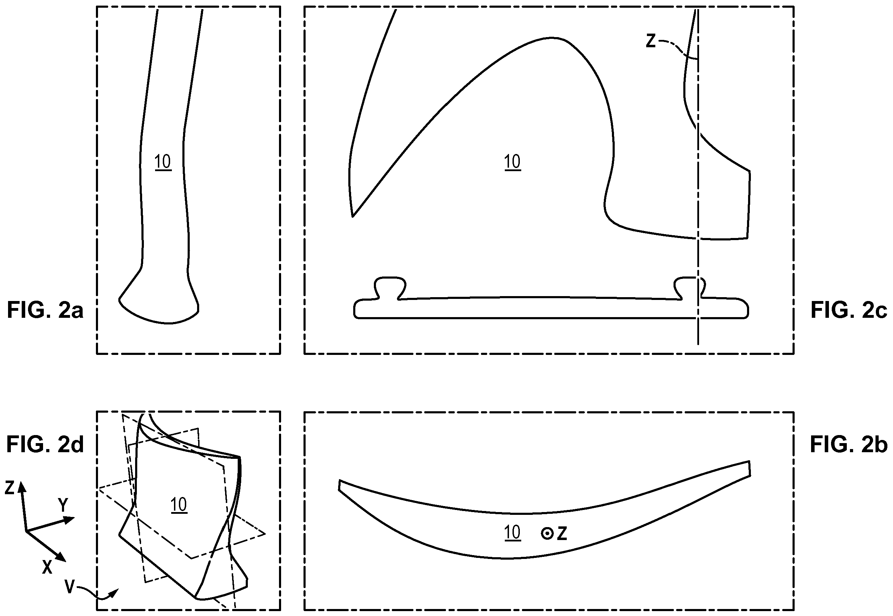

Pour l'analyse visuelle, l'opérateur utilise un logiciel d'affichage du volume tomographique V en trois dimensions qui lui permet de balayer l'intégralité de la pièce. Les **figures 2a à 2c** représentent les coupes bidimensionnelles de la pièce qui sont affichées à l'écran, chacune étant orientée selon un axe de l'image brute. La **figure 2d** illustre ces trois plans sur une vue en trois dimension de la pièce 10.

Les plans présentés en **figures 2a** et **2b** sont facilement exploitables pour réaliser la recherche des anomalies de tissage puisque l'opérateur peut parcourir la pièce 10 et avoir une vision globale. En revanche, le troisième plan, présenté en **figure 2c****,** est plus difficile à analyser puisque le twist de la pièce ne permet pas d'avoir de vision globale et l'opérateur doit balayer cette vue à de multiples reprises. Lorsqu'une indication suspecte est détectée dans l'image, une analyse plus fine doit être menée pour confirmer ou infirmer la présence de cette indication. Cela consiste à ajouter un plan qui est cette fois ci aligné en fonction de la pièce et non suivant les axes de l'image. Il s'agit d'une opération fastidieuse et très longue.

Le document US 6 041 132 présente une méthode utilisant un modèle simulé informatiquement, appelé modèle CAO, pour permettre de redresser le twist de la pièce.

Néanmoins, l'utilisation du modèle CAO pour redresser le twist est un procédé lourd et contraignant : lorsque le modèle est disponible, il n'est pas défini dans le même référentiel que le volume tomographique et il est nécessaire d'effectuer un « recalage ». Le calcul du recalage est une opération non triviale qui fait intervenir des méthodes complexes et coûteuses en ressources. En outre, il se peut que la pièce fabriquée ne corresponde pas au modèle CAO : le redressement effectué ne sera alors pas conforme.

La mise en œuvre d'une telle méthode est donc complexe.

### PRESENTATION DE L'INVENTION

Pour palier les inconvénients de l'art antérieur, notamment en s'affranchissant de l'utilisation d'un modèle CAO, l'invention définie par la revendication indépendante concerne un procédé de contrôle non-destructif d'une pièce aéronautique, comprenant une étape préliminaire d'obtention par tomographie numérique d'un volume dans lequel se trouve une représentation de ladite pièce aéronautique, le volume étant défini par des voxels, et caractérisé en ce qu'il comprend un traitement de redressement comprenant les étapes suivantes :
- (E21) Traitement de la représentation tomographique, ledit traitement consistant à extraire dudit volume les voxels se rapportant uniquement à la pièce,
- (E22) Génération d'une surface médiane de la pièce à l'intérieur du volume tomographique à partir dudit volume extrait se rapportant à la pièce, ladite surface médiane divisant la pièce en deux parties,
- (E23) Détermination d'un champ de vecteurs normaux à ladite surface médiane,
- (E24) Aplanissement de ladite surface médiane pour former une surface médiane aplanie dans un plan,
- (E25) Reconstruction d'un volume redressé contenant la pièce redressée autour la surface médiane aplanie, ladite reconstruction étant effectuée par correspondance entre des voxels du volume redressé le long de directions orthogonales à la surface médiane aplanie et entre des voxels du volume le long des vecteurs normaux de la surface médiane associés à ces directions orthogonales respectives,
- (E3) Analyse du volume redressé ainsi obtenu pour identifier les anomalies de la pièce.

La représentation tridimensionnelle redressée est à présent orientée selon les axes principaux du repère, ce qui facilite la recherche d'anomalie sur un moniteur d'affichage, à l'aide des plans de coupe bidimensionnels présentés précédemment. Les avantages pour les opérateurs sont multiples : analyse plus rapide, moins fatigante, moins d'opérations à effectuer, etc. La variabilité intra- et inter-opérateur est diminuée.

Enfin, puisque la représentation tridimensionnelle est redressée, le volume redressé est moins gourmand en ressource informatique d'affichage (mémoire vive, etc.), puisque le nombre de voxels liés à l'air est diminué (la taille du volume global est moins importante).

L'invention peut comprendre les caractéristiques suivantes, prises seules ou en combinaison :
- l'étape de traitement de la représentation tomographique (E21) est réalisée par segmentation en deux classes des voxels en fonction d'un niveau de gris,
- la pièce s'étend selon une direction principale, et la surface médiane s'étend aussi selon cette direction principale,
- l'étape de génération de la surface médiane est suivie d'une étape de filtrage passe-bas afin de supprimer certaines irrégularités,
- l'étape d'aplanissement (E24) se fait par projection de ladite surface médiane sur un plan,
- le plan de l'étape d'aplanissement (E24) est choisi de telle sorte que les distorsions liées à la projection sont minimisées,
- le voxel (et même chaque voxel) du volume redressé est caractérisé par sa distance, dite distance orthogonale, à un point de ladite surface médiane aplanie par projection orthogonale, dans lequel au point de la surface médiane aplanie correspond un point de la surface médiane, et dans lequel la valeur du voxel du volume situé à une distance le long de la direction définie par le vecteur normal passant par le point est récupérée, ladite distance étant fonction de la distance dite orthogonale,
- l'étape de reconstruction (E25) comprend les sous-étapes suivantes :
   (E251) choix d'un voxel dans l'espace de la surface médiane aplanie,
   (E252) calcul de la distance par projection orthogonale, dite distance orthogonale, de ce voxel à la surface médiane aplanie, et détermination du point projeté sur la surface médiane aplanie,
   (E253) détermination du point de la surface médiane non-redressée correspondant au point projeté de la surface non-redressée,
   (E254) récupération du vecteur normal passant par le point projeté correspondant sur la surface non-redressée,
   (E255) détermination de la valeur du voxel situé dans la direction du vecteur normal et à une distance fonction de la valeur de la distance orthogonale,
   (E256) report de la valeur du voxel au voxel choisi dans la représentation redressée,
- la fonction entre les deux distances est une fonction linéaire, préférablement l'identité,
- aucune modélisation informatique de ladite pièce aéronautique n'est utilisée,

Un exemple qui ne fait pas partie de l'invention propose aussi une unité de calcul comprenant des moyens de traitement de données et une mémoire, configurée pour mettre en œuvre le traitement de redressement tel que défini précédemment. En outre, un moniteur d'affichage est prévu, ledit moniteur affichant les données reçues par l'unité de calcul, et notamment les données du volume redressé.

Un autre exemple qui ne fait pas partie de l'invention propose aussi un produit programme d'ordinateur, configuré pour être exécuté par une unité de calcul et mettre en œuvre le traitement de redressement tel que défini précédemment.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 représente une aube twistée,
- Les figures 2a à 2d, présentées précédemment, illustrent différentes vues en coupe d'une pièce twistée,
- Les figures 3 et 4 représentent différentes étapes d'un procédé selon des modes de réalisation de l'invention,
- Les figures 5 et 6 représentent des illustrations d'axes médians et de surface médiane, respectivement en deux et trois dimensions,
- La figure 7 représente un champ de vecteurs normaux sur une surface médiane selon l'invention,
- La figure 8 représente un plan de projection pour aplanir la surface médiane,
- Les figures 9a à 9c représentent différentes étapes pour reconstruire le volume redressé à partir de l'aplanissement de la surface médiane,
- La figure 10 représente une reconstruction du volume redressé en cours,
- Les figures 11a à 11d représentent un volume redressé, avec une pièce redressée,
- La figure 12 représente une unité de calcul et un moniteur d'affichage.

### DESCRIPTION DETAILLEE

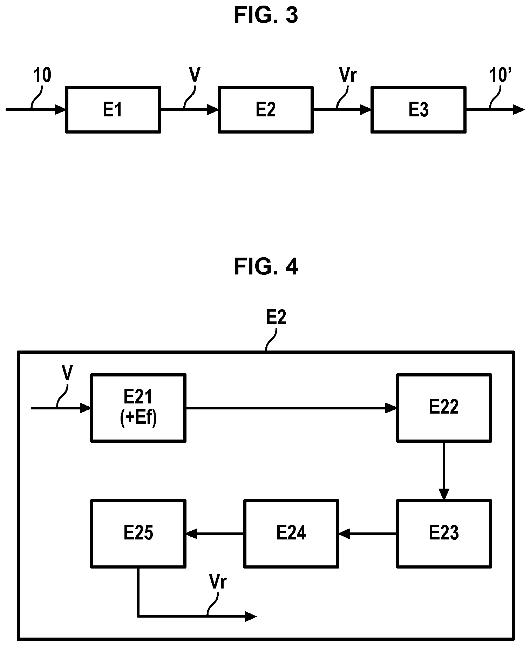

A présent, en référence aux **figures 3** et **4****,** une description détaillée du procédé de contrôle non-destructif par redressement va être donnée.

La pièce 10 sujette à l'inspection est destinée à une utilisation dans le domaine de l'aéronautique, et plus précisément dans le cadre de turbomachines. La description et les figures sont illustrées pour une aube telle que présentée en introduction, qui comprend une direction principale Z. Néanmoins, le procédé est applicable à toutes formes de pièce, de forme non-torique. En effet, une telle forme pourrait générer des difficultés de génération de la surface médiane ou des difficultés de projection, comme cela sera explicité par la suite.

Afin de pouvoir effectuer un contrôle non-destructif à l'intérieur de la pièce 10, une étape préliminaire E1 d'acquisition à l'aide d'un système d'imagerie de tomographie numérique et de moyens de calcul (non représenté sur les figures) est effectuée. Cette étape permet d'obtenir une représentation tridimensionnelle de la pièce 10 pour l'aéronautique. Le volume tomographie V obtenu est constitué de voxels Vx possédant chacun un niveau de gris. La pièce 10 est donc définie à l'intérieur du volume V par des voxels Vx ayant des niveaux de gris particulier.

A présent, le procédé plus spécifique de redressement E2 va être décrit. Ce procédé ne fait pas intervenir l'utilisation d'un modèle CAO.

Par abus de langage, on parlera de la « pièce 10 » pour désigner la représentation tomographique de la pièce 10 qui possède une existence matérielle. La référence 10' s'applique à la « pièce 10 » redressée.

L'étape E2 est typiquement effectuée à l'aide d'une unité de calcul 100 comprenant des moyens de traitement de données 110 et une mémoire 120. Un moniteur d'affichage 130 peut être prévu, configuré pour afficher des données notamment issues de l'unité de calcul 100.

### Génération de la surface médiane

L'étape de génération de la surface médiane peut comprendre deux étapes.

Tout d'abord, dans une première étape E21, un traitement de la représentation est effectué pour extraire du volume les voxels correspondant à la pièce. On parlera de masque M de la pièce 10 dans le volume tomographique V. Le masque M consiste à rassembler tous les voxels représentant uniquement la pièce.. On parle aussi d'extraction de la forme de la pièce 10. Le masque M est une image binaire pour laquelle chaque voxel qui la compose à un label 0 ou 1 : si le voxel appartient à la pièce 10, il a une valeur de 1 et si le voxel n'appartient pas à la pièce 10, il a une valeur de 0.

Un mode de réalisation consiste, à partir de la représentation obtenue par l'imagerie, à segmenter les voxels en deux catégories : air ou matière. Les voxels classés en « matière » sont ceux appartenant effectivement à la pièce 10 pour aéronautique, et les voxels classés en « air » (ou « vide ») sont ceux n'appartenant pas à la pièce pour aéronautique, mais forme un volume d'air, complémentaire au volume de la pièce.

Cette séparation peut être effectuée à l'aide des niveaux de gris, en choisissant un seuil de segmentation.

Une autre méthode consiste à calculer l'histogramme des niveaux de gris du volume tomographique et à maximiser la variance interclasse de cet histogramme afin de définir le seuil optimal qui sépare les voxels de l'air et ceux de la matière (voir référence [1]). D'autres méthodes de seuillage automatique sont envisageables (voir référence [2]).

Une fois le masque obtenu de l'étape E21 précédente, le procédé comprend une étape de génération E22 d'une surface médiane SM à partir dudit masque M.

La surface médiane SM est une surface qui divise la pièce 10 contenu dans le volume tomographique V en deux parties, c'est-à-dire plus exactement qui divise le masque M en deux volumes tridimensionnelles (puisque la surface médiane SM est calculée à partir du masque M).

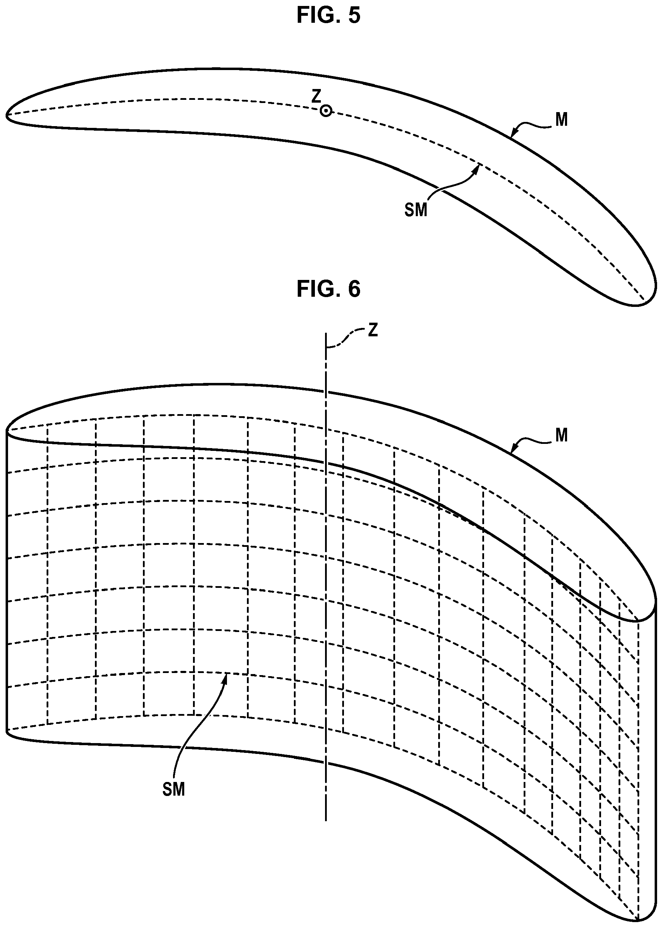

Par surface médiane SM, on entend une surface qui, dans un plan transversal orthogonal, est à équidistance des deux extrémités de la pièce. La **figure 5** illustre en deux dimensions une courbe médiane. La surface médiane SM est composée par l'ensemble des courbes médianes, comme représentée en **figure 6****.**

En d'autres termes, la surface médiane SM passe par le milieu de la pièce 10.

Afin d'avoir une surface médiane SM bien définie, il est préférable que la pièce 10 présente un allongement dans une direction, ici la direction Z. La surface médiane SM s'étend alors selon cette direction Z. Une pièce torique pourrait générer une surface médiane torique ce qui complexifie les étapes suivantes du procédé.

La surface médiane SM peut être calculée de différentes manières. Des méthodes d'analyse automatique de la géométrie de la pièce (la surface médiane SM doit couper la pièce 10 en deux) conviennent, ou bien des algorithmes plus complexes permettant d'extraire l'axe médian en deux dimensions ou la surface médiane en trois dimensions (voir référence [3] et [4]).

Avantageusement, une étape postérieure Ef de filtrage est appliquée pour lisser et régulariser la surface médiane SM et limiter les irrégularités. Un filtrage passe-bas, par exemple de type gaussien, peut être employé.

L'importance d'une surface lisse réside dans l'extraction des vecteurs normaux, qui forme l'étape suivante.

### Détermination d'un champ de vecteurs normaux

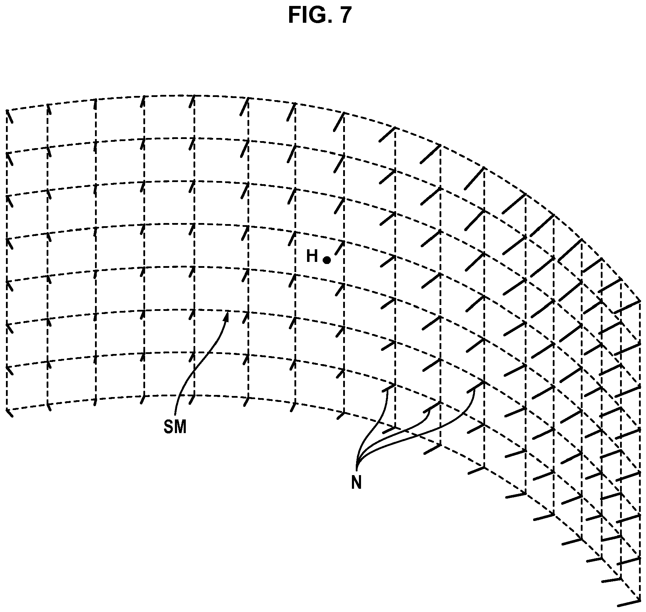

Après l'étape E22 de génération de la surface médiane, une étape E23 de détermination d'un champ de vecteurs normaux N est effectuée (voir **figure 7****).** Par vecteur normal N, on entend un vecteur orienté et orthogonal à la surface médiane SM à l'emplacement de l'origine du vecteur. On privilégie des vecteurs unitaires, même si n'importe quelle norme peut convenir.

Le champ de vecteurs N a pour but de connaitre la direction initiale de recherche des différents voxels du volume V à insérer dans un volume redressé Vr, une fois la surface médiane SM aplanie. Plus d'explication seront données par la suite.

Un exemple de calcul d'un vecteur normal N en un point H donné sur la surface consiste à extraire un ensemble de points de la surface très proches du point H et de calculer l'inertie de ce nuage de points, c'est-à-dire les variations dans l'espace dans un voisinage. Après avoir calculé les valeurs propres et les vecteurs propres de la matrice d'inertie, on peut en déduire le vecteur normal.

En effet, comme le nuage de point extrait correspond à une surface qui localement s'apparente à un plan, les valeurs (λᵢ) et vecteurs propres (vᵢ) avec i ∈ {1,2,3} : (v₁,λ₁), (v₂,λ₂) et (v₃,λ₃) sont organisés de la manière suivante : λ₁≈λ₂>>λ₃. Le vecteur v₃ correspond donc à la normale à la surface recherchée au point H. Le même processus est réalisé pour tous les points H appartenant à la surface médiane et le champ de vecteurs N est ainsi déterminé.

Les données relatives au champ de vecteurs sont stockées dans une mémoire et seront utilisées par la suite.

### Aplanissement de la surface médiane

A présent, la pièce 10 subit des transformations pour effectuer le redressement.

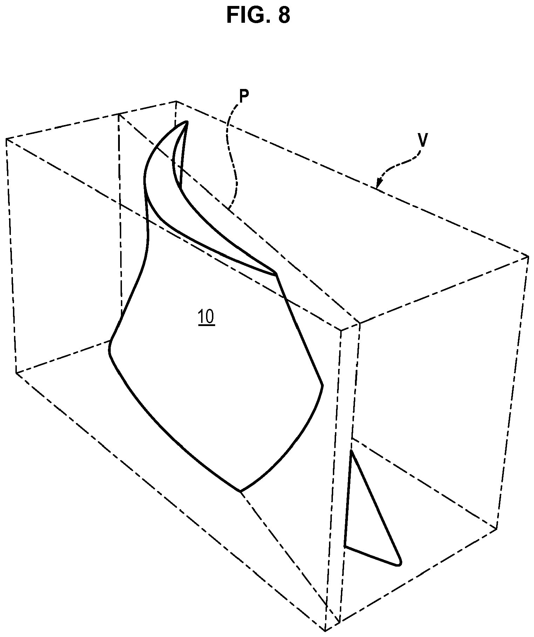

Dans une étape E24 d'aplanissement, la surface médiane SM qui est sous forme tridimensionnelle est aplanie dans un plan P, c'est-à-dire sous forme bidimensionnelle (voir **figure 8****,** dans laquelle la pièce 10 est représentée, avec le plan P, et non pas la surface médiane SM). La surface médiane SM issue de cette étape E24 est appelée surface médiane aplanie SMa.

Pour cela, une méthode consiste à choisir un plan, qui devient le plan P, et à projeter la surface médiane SM tridimensionnelle dans ce nouveau référentiel. La référence à la forme non-torique de la pièce 10 mentionnée précédemment se manifeste ici par le fait qu'il est préférable que chaque point projeté dans le plan P n'ait qu'un seul antécédent par côté du plan P ainsi que chaque point du volume n'ait qu'une seule projection possible. Dans le cas contraire, une incertitude serait créée lors de la reconstruction du volume redressé, comme cela sera explicité par la suite.

Avantageusement, le plan est choisi de sorte qu'il minimise les distorsions liées à la projection ; complémentaire, ledit plan peut aussi être choisi pour qu'il minimise l'ensemble des distances projetées.

On parle désormais de surface médiane aplanie SMa pour désigner la surface obtenue suite à l'étape E24, et de surface médiane SM non aplanie obtenue suite à l'étape E22.

### Redressement du volume

Enfin, à partir de la surface médiane aplanie SMa, le volume tomographique doit être reconstruit tout autour. On parle alors de volume redressé Vr.

Cette étape E25 de reconstruction fait intervenir les étapes E22 de génération de la surface médiane, E23 de génération du champ de vecteurs N et E24 d'aplanissement.

Dans cette étape E25, une correspondance est établie entre un voxel Vx' du volume redressé Vr, le long d'une direction orthogonale à la surface médiane aplanie SMa, et un voxel Vx du volume tomographique V associé, le long du vecteur normal N correspondant à cette direction orthogonale. Par correspondance, on entend que la valeur du niveau de gris du voxel Vx est implémentée dans à la valeur du voxel Vx'.

On parle ainsi de volume tomographique redressé Vr pour désigner le volume tomographique V obtenu à l'issue de l'étape E25, et de volume tomographique non redressé pour désigner le volume tomographique obtenu à l'issue de l'étape E1.

En d'autres termes, une correspondance est établie entre un voxel Vx' du volume redressé Vr et un voxel Vx du volume V non redressé. Pour cela, le voxel Vx' est caractérisé par sa distance h' à un point A' de ladite surface médiane aplanie SMa par projection orthogonale (c'est à dire le long d'une direction orthogonale à la surface médiane aplanie SMa et passant par le point A). A ce point A' correspond un point A de la surface médiane SM et la valeur du voxel Vx disposé à une distance h fonction de la distance h' le long de la direction définie par le vecteur normal N passant par le point A est récupérée.

La définition du point A' et de sa correspondance A est typiquement un intermédiaire pour pouvoir associer la direction orthogonale selon laquelle la distance h' est mesurée à un vecteur normal N selon lequel la distance h est mesurée.

Comme mentionné précédemment, s'il existe plusieurs points dont la projection correspond aux points A ou A', des incertitudes sont créées qui complexifient la reconstruction du volume.

On parle désormais de volume tomographique redressé pour désigner le volume tomographique obtenu à l'issue de l'étape E25, et de volume tomographique non redressé pour désigner le volume tomographique obtenu à l'issue de l'étape E1.

En balayant le volume redressé Vr à l'aide des voxels Vx', l'ensemble des valeurs de niveau de gris du volume tomographique V est réintégrée voxel après voxel dans le volume redressé, ce qui génère *in fine* une image tridimensionnelle redressée.

Il se peut que la correspondance d'un voxel Vx' du volume redressé ne tombe pas exactement sur un voxel Vx du volume non redressé mais entre huit voxels Vx. En pratique, une interpolation trilinéaire est effectuée à chaque correspondance.

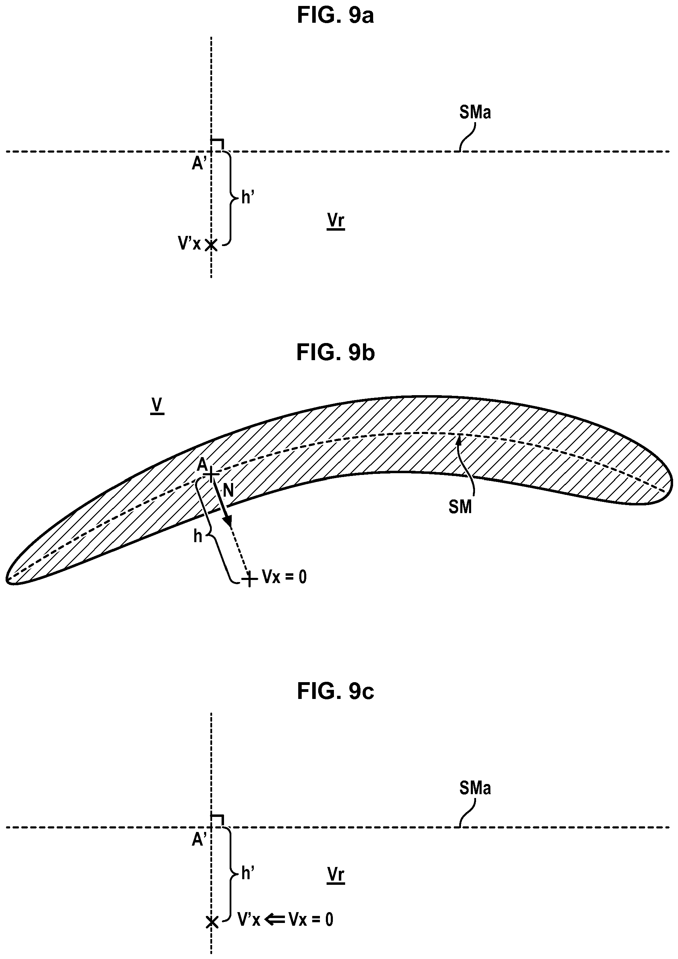

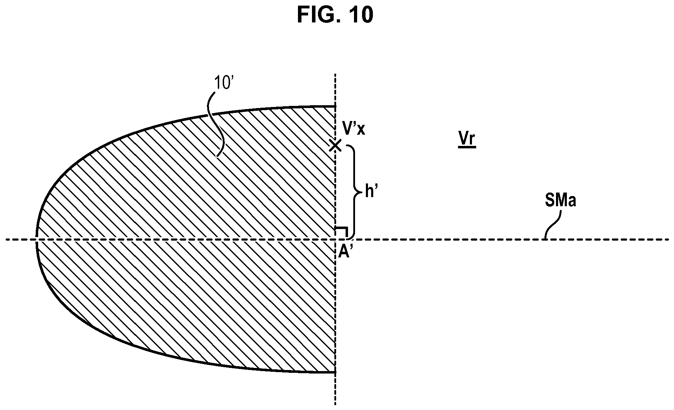

Les **figures 9a à 9c** et **10** illustrent en deux dimensions un mode de réalisation de l'étape de reconstruction.

Dans une sous-étape E251, un voxel Vx' dans le volume redressé Vr de la surface médiane aplanie SMa est sélectionné.

Dans une sous-étape E252, la distance h' par projection orthogonale sur ladite surface médiane aplanie est calculée. Cette distance h' est appelée distance orthogonale. Parallèlement, le point A' de la surface médiane aplanie correspondant à la projection de Vx' est calculé.

Dans une sous-étape E253, le point A de la surface médiane SM non redressée correspondant au point A' de la surface médiane aplanie SMa est déterminé. Pour cela, il est possible d'effectuer une étape intermédiaire de correspondance via le point correspondant de la surface médiane SM non aplanie.

La **figure 9a** illustre les étapes précitées, qui se déroulent dans le volume redressé Vr.

Dans une sous-étape E254, le vecteur normal N passant par le point A est récupéré.

Dans une sous-étape E255, la valeur du voxel Vx (dans le volume tomographique V non redressé) situé le long de la direction dudit vecteur normal N à une distance h fonction de la distance orthogonale h' est récupérée.

La **figure 9b** illustre les étapes précitées qui se déroulent dans le volume V.

Enfin, dans une sous-étape E256, la valeur du voxel Vx du volume V est assigné au voxel Vx' du volume redressé Vr.

La **figure 9c** illustre cette étape qui se déroule à nouveau dans le volume redressé.

Préférablement, pour limiter les déformations, la fonction liant h et h', c'est-à-dire liant les distances AVx et A'Vx', est une fonction linéaire de type h=δh'. Enfin, encore préférablement, on a δ=1, ce qui signifie que la fonction est l'identité et que h'=h : de la sorte, il suffit de reporter la même distance.

Plus généralement, la fonction doit permettre de conserver la topographie des défauts.

Comme indiqué précédemment, les étapes E251 à E256 sont itératives pour que le volume V soit redressé en intégralité. La **figure 10** illustre cette reconstruction par itération : la pièce redressée 10' est reconstruite voxel Vx' par voxel Vx', par récupération des valeurs des voxels Vx respectivement associés.

Pour effectuer cette itération, les étapes E251 et E252 peuvent être répétées pour tous les points situés sur la même droite, de sorte que les étapes E253 et E254 ne sont effectuées qu'une seule fois. En revanche, les étapes E255 et E256 sont répétées autant de fois que les étapes E251 et E252 l'ont été.

Lors de la reconstruction du volume, il se peut que le point Vx corresponde en fait dans le volume non redressé à un voxel Vx' d'air. Une valeur nulle peut par exemple être accordée à Vx. Pour éviter des calculs inutiles, le procédé peut établir que les correspondances suivantes seront effectuées pour des distances h inférieures. Alternativement, le choix d'un voxel Vx peut être fait en fonction d'une direction orthogonale prédéterminée auparavant. Cela signifie que dans une étape E251', il s'agit du point A qui est fixé et que la droite orthogonale à la surface médiane redressée passant par A est calculée. Ensuite, dans une étape E252', une distance h est choisie, déterminant ainsi un voxel Vx.

Dans ce mode de réalisation, il est possible d'itérer le procédé en répétant l'étape E252', préférablement en faisant augmenter la valeur de h, de façon à balayer le volume en direction de l'extérieur de la pièce 10. Dès lors qu'un voxel Vx est associé à un voxel Vx' d'air, le procédé peut considérer que la pièce a été intégralement reconstruite selon cette direction et les étapes E251', etc. sont ensuite répétées pour un autre point A.

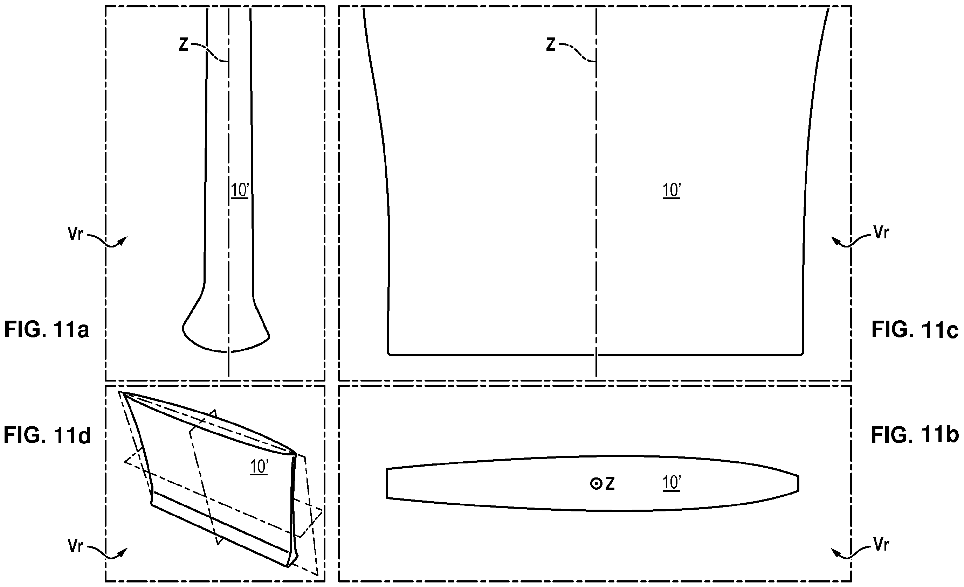

A l'issue de l'étape de reconstruction E25, un volume tomographique dit redressé Vr a été généré. Les **figures 11a** à **11c** représentent trois différents plans en coupe orthogonaux deux à deux et la **figure 11d** représentent la pièce redressée traversées par ces trois plans. En comparaison avec la figure 3c, ce plan issu du redressement est dorénavant exploitable sans complication particulière.

Du fait des transformations impliquées dans le procédé (projection et report de distance), la topographie des défauts est respectée, ce qui permet d'assurer qu'aucun défaut ne disparait lors de l'application du précédé : l'analyse par un opérateur sur le volume tomographique redressé se trouve plus fiable, plus stabilisé et plus rapide.

En outre, du fait du redressement de la pièce 10 dans le volume tomographique, la taille du fichier est diminuée puisque le nombre de voxels d'air est diminué.

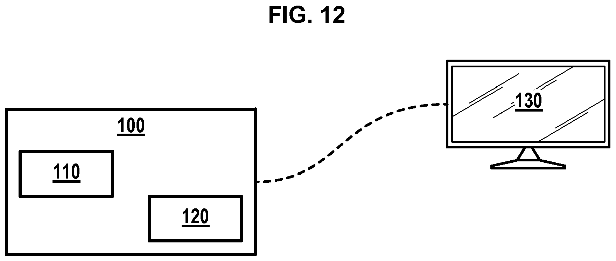

Enfin, une étape E3 d'analyse telle que définie en introduction est effectuée par un opérateur, à l'aide du moniteur 130 qui reçoit les données de l'unité de calcul 100 (**figure 12****).** Cette étape est désormais plus rapide, plus efficace, plus fiable, moins gourmande en ressource de calcul et possède une répétabilité inter-opérateur accrue.

Dans un exemple qui ne fait pas partie de l'invention on définit aussi un produit programme d'ordinateur qui peut être exécuté par les moyens de traitement de données 110 de l'unité de calcul 100 et qui permet de mettre en œuvre le traitement de redressement décrit précédemment. En particulier, l'image tridimensionnelle redressée est stockée dans la mémoire 120.

### Références :

[1] Nobuyuki Otsu, « A threshold selection method from gray-level histograms », IEEE Trans. Sys., Man., Cyber., vol. 9, 1979, p. 62-66 (DOI 10.1109/TSMC.1979.4310076).
[2] M. Sezgin and B. Sankur, « Survey over image thresholding techniques and quantitative performance evaluation », Journal of Electronic Imaging, vol. 13, no 1, 2003, p. 146-165 (DOI 10.1117/1.1631315).
[3] Hesselink, W. H., & Roerdink, J. B. (2008). Euclidean skeletons of digital image and volume data in linear time by the integer medial axis transform. Pattern Analysis and Machine Intelligence, IEEE Transactions on, 30(12), 2204-2217.
[4] Chaussard, J., Couprie, M., & Talbot, H. (2009, January). A discrete À-medial axis. In Discrete Geometry for Computer Imagery (pp. 421-433). Springer Berlin Heidelberg.

## Revendications

1. Procédé mis en œuvre par ordinateur de contrôle non-destructif d'une pièce aéronautique (10), comprenant une étape préliminaire (E1) d'obtention par tomographique numérique d'un volume (V) dans lequel se trouve une représentation de ladite pièce aéronautique (10), le volume (V) étant défini par des voxels (Vx), et **caractérisé en ce qu'**il comprend un traitement de redressement (E2) comprenant les étapes suivantes :
- (E21) Traitement de la représentation tomographique, ledit traitement consistant à extraire dudit volume les voxels se rapportant uniquement à la pièce
- (E22) Génération d'une surface médiane (SM) de la pièce (10) à l'intérieur du volume tomographique à partir dudit volume extrait se rapportant à la pièce, ladite surface médiane (SM) divisant la pièce (10) en deux parties,
- (E23) Détermination d'un champ de vecteurs normaux (N) à ladite surface médiane (SM),
- (E24) Aplanissement de ladite surface médiane (SM) pour former une surface médiane aplanie (SMa) dans un plan (P),
- (E25) Reconstruction d'un volume redressé (Vr) contenant la pièce (10, 10') redressée autour la surface médiane aplanie (SMa), ladite reconstruction étant effectuée par correspondance entre des voxels (Vx') du volume redressé (Vr) le long de directions orthogonales à la surface médiane aplanie (SMa) et des voxels (Vx) du volume (V) le long des vecteur normaux (N) de la surface médiane (SM) associés à ces directions orthogonales respectives, le procédé comprenant en outre une étape d'affichage des données du volume redressé et une étape (E3) d'analyse par un opérateur du volume redressé ainsi affiché pour identifier les anomalies de la pièce.

2. Procédé de contrôle non-destructif selon la revendication précédente dans lequel l'étape (E22) de génération de la surface médiane (SM) est suivie d'une étape (Ef) de filtrage passe-bas afin de supprimer certaines irrégularités.

3. Procédé de contrôle non-destructif selon l'une quelconque des revendications précédentes, dans lequel l'étape d'aplanissement (E24) se fait par projection de ladite surface médiane sur le plan (P).

4. Procédé de contrôle non-destructif selon la revendication précédente, dans lequel le plan de l'étape d'aplanissement (E24) est choisi de telle sorte que les distances des projections sont minimisées.

5. Procédé de contrôle non-destructif selon l'une quelconque des revendications précédentes, dans lequel le voxel (Vx') du volume redressé (Vr) est **caractérisé par** sa distance (h'), dite distance orthogonale, à un point (A') de ladite surface médiane aplanie (SMa) par projection orthogonale, dans lequel au point (A') de la surface médiane aplanie (SMa) correspond un point (A) de la surface médiane (SM), et dans lequel la valeur du voxel (Vx) du volume (V) situé à une distance (h) le long de la direction définie par le vecteur normal (N) passant par le point (A) est récupérée, ladite distance (h) étant fonction de la distance dite orthogonale (h').

6. Procédé de contrôle non-destructif selon la revendication précédente, dans lequel la fonction liant les deux distances (h, h') est une fonction linéaire, préférablement l'identité.

7. Procédé de contrôle non-destructif selon la revendication 5 ou 6, dans lequel l'étape de reconstruction (E25) comprend les sous-étapes suivantes :
(E251) choix d'un voxel dans l'espace de la surface médiane aplanie,
(E252) calcul de la distance par projection orthogonale, dite distance orthogonale, de ce voxel à la surface médiane aplanie, et détermination du point projeté sur la surface médiane aplanie,
(E253) détermination du point de la surface médiane non-redressée correspondant au point projeté de la surface non-redressée,
(E254) récupération du vecteur normal passant par le point projeté correspondant sur la surface non-redressée,
(E255) détermination de la valeur du voxel situé dans la direction du vecteur normal et à une distance fonction de la valeur de la distance orthogonale,
(E256) report de la valeur du voxel au voxel choisi dans la représentation redressée,

8. Procédé de contrôle non-destructif selon l'une quelconque des revendications 5 à 7, dans lequel chaque point projeté dans le plan (P) n'a qu'un seul antécédent par côté du plan (P) et chaque point du volume n'a qu'une seule projection possible.

9. Procédé de contrôle non-destructif selon l'une quelconque des revendications précédentes, dans lequel aucune modélisation informatique de ladite pièce aéronautique (10) n'est utilisée.

## Patentansprüche

1. Von einem Computer ausgeführtes Verfahren zur zerstörungsfreien Prüfung eines Luftfahrtteils (10), das einen vorhergehenden Schritt (E1) zum Erhalten eines Volumens (V), in dem sich eine Darstellung des Luftfahrtteils (10) befindet, durch digitale Tomographie umfasst, wobei das Volumen (V) durch Voxel (Vx) definiert ist, und **dadurch gekennzeichnet, dass** es eine Begradigungsverarbeitung (E2) umfasst, die die folgenden Schritte umfasst:
- (E21) Verarbeiten der tomographischen Darstellung, wobei die Verarbeitung darin besteht, von dem Volumen die Voxel zu extrahieren, die sich einzig auf das Teil beziehen,
- (E22) Erzeugen einer Medianfläche (SM) des Teils (10) im Inneren des tomographischen Volumens ausgehend von dem extrahierten Volumen, das sich auf das Teil bezieht, wobei die Medianfläche (SM) das Teil (10) in zwei Teile teilt,
- (E23) Bestimmen eines Feldes von Vektoren, die normal (N) zu der Medianfläche (SM) sind,
- (E24) Einebnen der Medianfläche (SM), um eine in einer Ebene (P) eingeebnete Medianfläche (SMa) zu bilden,
- (E25) Rekonstruieren eines begradigten Volumens (Vr), das das um die eingeebnete Medianfläche (SMa) begradigte Teil (10, 10') enthält, wobei die Rekonstruktion durch Entsprechung zwischen Voxeln (Vx') des begradigten Volumens (Vr) entlang von Richtungen, die orthogonal zu der eingeebneten Medianfläche (SMa) sind, und Voxeln (Vx) des Volumens (V) entlang den Vektoren durchgeführt wird, die normal (N) zu der Medianfläche (SM) sind und die diesen jeweiligen orthogonalen Richtungen zugehörig sind,
wobei das Verfahren ferner einen Schritt zum Anzeigen der Daten des begradigten Volumens und einen Schritt (E3) zum Analysieren des so angezeigten begradigten Volumens durch einen Bediener umfasst, um Anomalien in dem Teil zu identifizieren.

2. Verfahren zur zerstörungsfreien Prüfung nach dem vorhergehenden Anspruch, wobei auf den Schritt (E22) zum Erzeugen der Medianfläche (SM) ein Schritt (Ef) zum Tiefpassfiltern folgt, um bestimmte Unregelmäßigkeiten zu beseitigen.

3. Verfahren zur zerstörungsfreien Prüfung nach einem der vorhergehenden Ansprüche, wobei der Einebnungsschritt (E24) durch Projektion der Medianfläche auf die Ebene (P) erfolgt.

4. Verfahren zur zerstörungsfreien Prüfung nach dem vorhergehenden Anspruch, wobei die Ebene des Einebnungsschritts (E24) derart gewählt wird, dass die Abstände der Projektionen minimiert werden.

5. Verfahren zur zerstörungsfreien Prüfung nach einem der vorhergehenden Ansprüche, wobei der Voxel (Vx') des begradigten Volumens (Vr) durch seinen Abstand (h'), den sogenannten orthogonalen Abstand, zu einem Punkt (A') der eingeebneten Medianfläche (SMa) durch orthogonale Projektion gekennzeichnet ist, wobei der Punkt (A') der eingeebneten Medianfläche (SMa) einem Punkt (A) der Medianfläche (SM) entspricht und wobei der Wert des Voxels (Vx) des Volumens (V), der sich in einem Abstand (h) entlang der Richtung befindet, die durch den normalen Vektor (N) definiert wird, der durch den Punkt (A) verläuft, wiedergewonnen wird, wobei der Abstand (h) abhängig von dem sogenannten orthogonalen Abstand (h') ist.

6. Verfahren zur zerstörungsfreien Prüfung nach einem der vorhergehenden Ansprüche, wobei die Funktion, die die zwei Abstände (h, h') verbindet, eine lineare, vorzugsweise eine Identitätsfunktion, ist.

7. Verfahren zur zerstörungsfreien Prüfung nach Anspruch 5 oder 6, wobei der Schritt zum Rekonstruieren (E25) die folgenden Teilschritte umfasst:
(E251) Auswählen eines Voxels in dem Raum der eingeebneten Medianfläche,
(E252) Berechnen des Abstands, orthogonaler Abstand genannt, durch orthogonale Projektion dieses Voxels auf die eingeebnete Medianfläche und Bestimmen des auf die eingeebnete Medianfläche projizierten Punktes,
(E253) Bestimmen des Punktes der nicht begradigten Medianfläche, der dem projizierten Punkt der nicht begradigten Fläche entspricht,
(E254) Wiedergewinnen des normalen Vektors, der durch den entsprechenden projizierten Punkt auf der nicht begradigten Fläche verläuft,
(E255) Bestimmen des Voxelwerts, der in der Richtung des normalen Vektors und in einem Abstand liegt, der von dem Wert des orthogonalen Abstands abhängig ist,
(E256) Übertragen des Werts des Voxels auf den in der begradigten Darstellung ausgewählten Voxel.

8. Verfahren zur zerstörungsfreien Prüfung nach einem der Ansprüche 5 bis 7, wobei jeder in der Ebene (P) projizierte Punkt nur einen Vorgänger pro Seite der Ebene (P) aufweist und jeder Punkt des Volumens nur eine einzige mögliche Projektion aufweist.

9. Verfahren zur zerstörungsfreien Prüfung nach einem der vorhergehenden Ansprüche, wobei keine informatische Modellierung des Luftfahrzeugteils (10) verwendet wird.

## Claims

1. A method implemented by computer, of non-destructive testing of an aeronautical component (10), comprising a preliminary step (E1) of obtaining by digital tomography a volume (V) wherein there is a representation of said aeronautical component (10), the volume (V) being defined by voxels (Vx), and **characterized in that** it comprises a righting processing (E2) comprising the following steps:
- (E21) Processing of the tomographic representation, said processing consisting of extracting from said volume the voxels relating to the component only
- (E22) Generation of a median surface (SM) of the component (10) inside the tomographic volume from said extracted volume relating to the component, said median surface (SM) dividing the component (10) into two parts,
- (E23) Determination of a field of vectors normal (N) to said median surface (SM),
- (E24) Flattening of said median surface (SM) to form a flattened median surface (SMa) in a plane (P),
- (E25) Reconstruction of a righted volume (Vr) containing the component (10, 10') righted around the flattened median surface (SMa), said reconstruction being performed by mapping between voxels (Vx') of the righted volume (Vr) along directions orthogonal to the flattened median surface (SMa) and voxels (Vx) of the volume (V) along the normal vector (N) of the median surface (SM) associated with these respective orthogonal directions,
the process also comprising a step for displaying the data of the righted volume and an analysis step (E3) by an operator of the righted volume thus displayed to identify the anomalies of the component.

2. A method of non-destructive testing according to the preceding claim wherein the step (E22) for generation of the median surface (SM) is followed by a low-pass filtering step (Ef) for eliminating some irregularities

3. A method of non-destructive testing according to any one of the preceding claims, wherein the flattening step (E24) is conducted by projection of said median surface on the plane (P).

4. A method of non-destructive testing according to the preceding claim, wherein the plane of the flattening step (E24) is selected such that the distances of the projections are minimized.

5. A method of non-destructive testing according to any one of the preceding claims, wherein the voxel (Vx') of the righted volume (Vr) is **characterized by** its distance (h'), so-called orthogonal distance, from a point (A') of said flattened median surface (SMa) by orthogonal projection, wherein a point (A) of the median surface (SM) corresponds to the point (A') of the flattened median surface (SMa), and wherein the value of the voxel (Vx) of the volume (V) located at a distance (h) along the direction defined by the normal vector (N) passing through the point (A) is retrieved, said distance (h) being a function of the so-called orthogonal distance (h').

6. A method of non-destructive testing according to the preceding claim, wherein the function connecting the two distances (h, h') is a linear function, preferably the identity.

7. A method of non-destructive testing according to claim 5 or 6, wherein the reconstruction step (E25) comprises the following sub-steps:
(E251) choice of a voxel in space of the flattened median surface,
(E252) calculation of the distance by orthogonal projection, so-called orthogonal distance, of this voxel from the flattened median surface, and determination of the point projected into the flattened median surface,
(E253) determination of the point of the non-righted median surface corresponding to the projected point of the non-righted surface,
(E254) recovery of the normal vector passing through the corresponding projected point on the non-righted surface,
(E255) determination of the value of the voxel located in the direction of the normal vector and at a distance as a function of the value of the orthogonal distance,
(E256) deferring of the value of the voxel to the voxel selected in the righted representation.

8. A method of non-destructive testing according to any one of claims 5 to 7, wherein each point projected in the plane (P) has just a single antecedent per side of the plane (P) as well as each point of the volume having just a single possible projection

9. A method of non-destructive testing according to any one of the preceding claims, wherein no computer modelling of said aeronautical component (10) is used.
